# EUROPÄISCHE PATENTANMELDUNG

(11) **EP 2 599 762 A1**
(43) Veröffentlichungstag der Anmeldung: **05.06.2013**
(21) Anmeldenummer: 11191339.8
(22) Anmeldetag: 30.11.2011
(51) Int. Cl.: C04B 41/71, E01C 11/00

(54) **Reparaturverfahren für Straßenbeläge, insbesondere für offenporige Asphalte**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur Reparatur von Deckschichten für Straßen, Wege und andere Verkehrsflächen, bei dem man ein polymeres Material in einer Menge von mindestens 20 g/m² auf die beschädigte Stelle aufbringt, eine erste Polyurethanreaktionsmischung (kann Additive enthalten) in einer Menge von mindestens 80 g/m² auf das polymere Material aufbringt und eine Mischung, enthaltend mineralischen Zuschlagstoff und eine zweite Polyurethanreaktionsmischung, auf die erste Polyurethanreaktionsmischung aufbringt und aushärten lässt. Weiter betrifft die vorliegende Erfindung ein Reparaturkit zur Reparatur von Deckschichten für Straßen, Wege und andere Verkehrsflächen.

## Beschreibung

Die vorliegende Erfindung betrifft ein Verfahren zur Reparatur von Deckschichten für Straßen, Wege und andere Verkehrsflächen, bei dem man ein polymeres Material in einer Menge von mindestens 20 g/m² auf die beschädigte Stelle aufbringt, eine erste Polyurethanreaktionsmischung in einer Menge von mindestens 80 g/m² auf das polymere Material aufbringt und eine Mischung, enthaltend mineralische Zuschlagstoffe und eine zweite Polyurethanreaktionsmischung, auf die erste Polyurethanreaktionsmischung aufbringt und aushärten lässt. Weiter betrifft die vorliegende Erfindung ein Reparaturkit zur Reparatur von Deckschichten für Straßen, Wege und andere Verkehrsflächen.

Durch starken Verkehr oder Witterungseinflüsse kommt es bei Straßenbelägen häufig zu Defekten, wie Ausmagerungen und Schlaglöchern. Wenn die Deckschicht nicht komplett saniert werden soll, können die Defekte auch durch Verfüllen repariert werden. Üblicherweise erfolgt dies durch den sogenannten heißen Verguss mit bitumengebundenen mineralischen Zuschlagstoffen oder durch sogenannten kalten Verguss mit lösungsmittelhaltigem oder emulgiertem Bitumen und mineralischen Zuschlagstoffen. Weiter gibt es Ansätze, kunststoffbasierte Gemische mit mineralischen Zuschlagstoffen einzusetzen.

So beschreibt CA 2236499 eine frostbeständige Deckschicht für Straßen zur erneuten Beschichtung von Beton, Asphalt, Backstein, Steinplatten, Fliesen und Holz auf Basis von Polyurethanen. Dabei können auch gelöste, bitumenbasierte Primer eingesetzt werden.

JP 02088802 beschreibt eine Reparaturmischung für Straßen, wobei ein Polyurethanbasierter Primer auf die beschädigte Stelle aufgebracht wird und auf diesen Primer eine Mischung aus mineralischen Zuschlagstoffen und Polyurethanprepolymer in dichtester Packung aufgebracht und mit Dampf gehärtet wird.

Nachteile der bekannten Verfahren sind eine beschränkte Lebensdauer durch nicht ausreichende Haftung.

Aus Lärmschutzgründen werden immer häufiger offenporige Asphalte eingesetzt, die auch ein sehr gutes Drainageverhalten zeigen, wodurch Wasseransammlungen an deren Oberfläche vermieden werden und beispielsweise Aquaplaning vorgebeugt werden kann. Diese offenporigen Asphalte sind aber recht teuer und weisen in der Regel nur Lebensdauern von etwa 10 Jahren auf. Leider existieren zur Zeit nur unzureichende Möglichkeiten, defekte, offenporige Asphaltdeckschichten zu reparieren, da die Haftung bekannter, offenporiger Reparaturmaterialien auf offenporigen Asphalten nur sehr beschränkt ist. Werden keine offenporigen Reparaturmaterialien eingesetzt, erhöhen sich die Fahrgeräusche und es können sich Wasseransammlungen an der Oberfläche bilden.

Aufgabe der vorliegenden Erfindung war es daher, ein Verfahren zur Reparatur von Deckschichten für Straßen, Wege und andere Verkehrsflächen zu liefern, das eine hervorragende Haftung zum Untergrundmaterial zeigt und leicht und schnell verarbeitet werden kann. Insbesondere war es Aufgabe der vorliegenden Erfindung ein Verfahren zur Reparatur von offenporigem Asphalt zu liefern, das sehr gute Haftungswerte liefert und keinen Einfluss auf die Drainagefähigkeit oder die Reduzierung von Fahrgeräuschen hat.

Diese Aufgabe wird gelöst durch ein Verfahren zur Reparatur von Deckschichten für Straßen, Wege und andere Verkehrsflächen, bei dem man ein polymeres Material in einer Menge von mindestens 20 g/m² auf die beschädigte Stelle aufbringt, eine erste Polyurethanreaktionsmischung in einer Menge von mindestens 80 g/m² auf das polymere Material aufbringt und eine Mischung, enthaltend mineralische Zuschlagstoffe und eine zweite Polyurethanreaktionsmischung auf die erste Polyurethanreaktionsmischung, aufbringt und aushärten lässt.

Als polymeres Material wird vorzugsweise ein polymeres Material mit einem zahlenmittleren Molekulargewicht von mindestens 500 g/mol, besonders bevorzugt von mindestens 1000 g/mol. Dabei weist das polymere Material auf Gestein und/oder Bitumen haftende Gruppen und Strukturen auf, wie Säuregruppen, Isocyanatgruppen, Estergruppen, Acrylatgruppen, Methylmethacrylatgruppen, Phenolgruppen, Phosphatgruppen, Amidgruppen, Epoxydgruppen, Silangruppen, lösliche Bitumenfraktionen, hydrophobe Alkylgruppen als Seitenketten oder in der Hauptkette, modifizierte Fettsäureestergruppen, Fettsäurederivatgruppen, hydrophobe Polyolgruppen, oder amphiphile Strukturen, beispielsweise Strukturen, aufgebaut aus Alkylketten mit einer C-Kettenlänge größer 4 und hydrophilen oder ionischen Kopfgruppen. Besonders bevorzugt weist das polymere Material, gegebenenfalls neben den auf Gestein und/oder Bitumen haftenden Gruppen, Harnstoffgruppen und/oder Urethangruppen auf.

Vorzugsweise sind die eingesetzten polymeren Materialien in einem geeigneten Lösemittel gelöst. Im Allgemeinen sind Lösungsmittel geeignet, die neben ausreichenden Lösungseigengschaften für das polymere Material auch als Lösungsmittel oder Quellmittel für Bitumen fungieren und ausreichend schnell verdunsten und zu keiner bleibenden Schädigung des zu beschichtenden Asphalts führen. Beispiele für solche Lösungsmittel sind Xylol, Toluol, Trichlorethen, Lösungmittelnaphta, modifiziertes Naphtha, Ethylbenzol, Öle, Benzin, Diesel, Aceton, Methylethylketon sowie chlorierte und/oder fluorierte Lösungsmittel, die einzeln oder in Form von Mischungen eingesetzt werden können.

Die erfindungsgemäß einsetzbaren polymeren Materialien können auch in Form von Reaktionsmischungen eingesetzt werden, wobei die polymeren Materialen beispielsweise erst nach Auftragen auf die zu reparierende Stelle entstehen. Beispiele für eine Klasse solcher polymeren Materialien können isocyanatenthaltende Reaktionsmischungen sein. Auch diese Reaktionsmischungen können Lösemittel enthalten.

Solche Materialien sind bekannt und beispielsweise beschrieben in Waterborne & Solvent Based Surface Coating Resins and Their Applications: Polyurethanes. Wiley, 1998, ISBN 0471978868, 9780471978862. Vorzugsweise werden einkomponenten-Polyurethane oder acrylatmodifizierte Bitumelösungen eingesetzt. Diese sind beispielsweise unter dem Handelsnamen Mastertop P 690 und Mastertop P 691 kommerziell erhältlich.

Vorzugsweise wird das polymere Material in einer Menge von mindestens 20 g/m², bevorzugt von 30 bis 300 g/m² und besonders bevorzugt von 50 bis 200 g/m², jeweils bezogen auf das reine polymere Material ohne Berücksichtigung von beispielsweise gegebenenfalls enthaltenem Lösemittel, aufgebracht.

Als Alternative zum Aufbringen von polymerem Material auf die beschädigte Stelle kann die Oberfläche der zu reparierenden Stelle durch Beflammung aktiviert werden. Diese kann durch baustellenübliche Brenner erfolgen und muss unmittelbar vor der Applikation der Polyurethanreaktionsmischung durchgeführt werden. Allerdings wird das als minderwertige Alternative eingeschätzt, da offene Flammen auf der Baustelle vermieden werden sollten, die unterliegenden Schichten an Bitumen thermisch geschädigt werden und dadurch die Langzeitbeständigkeit reduziert wird, eine Anwendung bei offenporigen Asphalten nicht möglich ist ohne das Material zu zerstören und die Dauer und Gleichmäßigkeit der Beflammung nicht überprüft und sichergestellt werden kann, wodurch die Qualitätssicherung fast unmöglich wird.

Als mineralischer Zuschlagstoff kann dabei jeder geeignete mineralische Zuschlagstoff eingesetzt werden. Es sollte jedoch darauf geachtet werden, dass zum Beispiel verwendete Gesteinskörnungen einen ausreichenden Widerstand gegenüber Schlagzertrümmerung aufweisen und sie ausreichend polierresistent sind. Zudem ist ein hohes Maß an günstiger Kornform von Vorteil. Aus vorgenannten Gründen sollten vorzugsweise Gesteinsarten bzw. mineralische Materialien mit hoher Härte, wie Grauwacken, Quarz, Granit oder Diabase eingesetzt werden. Dabei kann in bestimmten Fällen das mineralische Material beispielsweise feine Gesteinskörnung mit einem Fließkoeffizienten von weniger als 30s in Form von Sand oder aber auch feine Gesteinskörnungen mit einem Fließkoeffizienten von mehr als 35s gemahlenem Gestein, so genanntes gebrochenes Material, eingesetzt werden. Besonders bevorzugt wird als mineralischer Zuschlagstoff eine Gesteinskörnung eingesetzt, die zu einem überwiegenden Teil aus gebrochenem Korn besteht. Vorzugsweise werden als mineralischen Zuschlagstoff Gesteinskörnungen mit geeigneter Korngrößenverteilung in Anlehnung an die Vorschriften im bitumenhaltigen Straßenbau und in Abhängigkeit des Verwendungszwecks ausgewählt. Für den Sonderfall offenporiger Asphalt ist ausschließlich bzw. beinahe ausschließlich eine einzelne Korngruppe einer Gesteinskörnung zu verwenden.

Vorzugsweise betragen die Sieblinienbereiche des mineralischen Zuschlagstoffes 0 bis 32 mm, besonders bevorzugt 1 bis 16 mm und insbesondere 2 bis 11 mm. Der Masseanteil von mineralischem Zuschlagstoff mit Korngrößen kleiner 0,063 mm ist dabei bevorzugt kleiner 15 M.-% und der Masseanteil von mineralischem Zuschlagstoff mit Korngrößen größer 16 mm bevorzugt kleiner gleich 10 M.-%. Sieblinien sind in Anlehnung an die einschlägige europäische Normung DIN EN 13108 zu konzipieren.

Vorzugsweise ist die Asphaltdeckschicht eine Asphaltdeckschicht, besonders bevorzugt eine offenporige Asphaltdeckschicht, und die Mischung, enthaltend mineralischen Zuschlagstoff und eine zweite Polyurethanreaktionsmischung, härtet zu einem offenporigen Material aus. Dazu kann die Größenverteilung der Partikel des mineralischen Zuschlagstoffes der Größenverteilung des üblicherweise zur Herstellung von offenporigem Asphalt eingesetzten mineralischen Zuschlagstoffes entsprechen, so dass sich Poren bilden können. Zum Verfüllen von flachen Fehlstellen im Untergrund können auch Korngruppen gewählt werden, die kleiner sind als diejenigen, die normalerweise für einen Neubau eines offenporigen Asphaltes genutzt werden. Insbesondere sollte der Durchmesser des eingesetzten Gröbstkorns kleiner als die Tiefe der Fehlstelle sein, wodurch auch bei flachen Fehlstellen der Aufbau eines stabileren dreidimensionalen Netzwerks erreicht wird, wobei die Tiefe der Fehlstelle kleiner als die Sieblinie ist. Die Abmischung des Reparaturmaterials bzw. die Sieblinie muss ausreichend eng gehalten sein, um einen Hohlraumgehalt von mindestens 10, vorzugsweise mindestens 15, besonders bevorzugt mindestens 20 und insbesondere mindestens 25 Vol.-%, bezogen auf das reine mineralische Material ohne Bindemittel, zu erreichen.

Das erste und das zweite Polyurethanmaterial kann gleich oder unterschiedlich sein. Dabei bedeutet "gleich", dass jeweils die gleichen polyurethanbildenden Stoffe, wie isocyanate, höhermolekulare Verbindungen mit gegenüber Isocyanaten reaktiven Gruppen und gegebenenfalls Kettenverlängerer in gleichem Verhältnis zueinander eingesetzt werden. Sollten darüber hinaus unterschiedliche weitere Additive eingesetzt werden, gelten die Polyurethane im Rahmen der Erfindung dennoch als gleich.

Dabei sind die erste und die zweite Polyurethanreaktionsmischung vorzugsweise gleich.

Unter einer Polyurethanreaktionsmischung wird eine Mischung aus Verbindungen mit Isocyanatgruppen und Verbindungen mit gegenüber Isocyanaten reaktiven Gruppen verstanden, wobei der Reaktionsumsatz, bezogen auf die zur Herstellung der Polyurethanreaktionsmischung eingesetzten Isocyanatgruppen vorzugsweise kleiner 90 %, besonders bevorzugt kleiner 75 % und insbesondere kleiner 50% ist. Dabei umfassen die Verbindungen mit gegenüber Isocyanaten reaktiven Gruppen sowohl hochmolekulare Verbindungen, wie Polyether- und Polyesterole als auch niedermolekulare Verbindungen, wie beispielsweise Glycerin, Glycol und auch Wasser. Ist der Reaktionsumsatz, bezogen auf die Isocyanatgruppe, größer als 90%, wird im Folgenden von einem Polyurethan gesprochen. Dabei kann eine Polyurethanreaktionsmischung auch weitere Reaktionsmischungen zur Herstellung von Polymeren enthalten. Als weitere Reaktionsmischungen zur Herstellung von Polymeren können beispielsweise Reaktionsmischungen zur Herstellung von Epoxiden, Acrylaten oder Polyesterharzen eingesetzt werden. Der Anteil an weiteren Reaktionsmischungen zur Herstellung von Polymeren beträgt dabei vorzugsweise weniger als 50 Gew.-%, bezogen auf das Gesamtgewicht der Polyurethanreaktionsmischung. Besonders bevorzugt enthält die Polyurethanreaktionsmischung keine weiteren Reaktionsmischungen zur Herstellung von Polymeren.

Bei der Polyurethanreaktionsmischung kann es sich um sogenannte feuchtigkeitshärtende Systeme handeln. Diese umfassen Isocyanatprepolymere, welche durch Zugabe von Wasser bzw. durch Luftfeuchtigkeit unter Bildung von in erster Linie Harnstoffgruppen Polyurethane bzw. Polyharnstoffe bilden.

Vorzugsweise werden zur Herstellung der Polyurethanreaktionsmischung sogenannte Zweikomponenten-Systeme eingesetzt. Dazu wird eine Isocyanatkomponente, enthaltend Isocyanatgruppen enthaltende Verbindungen, und eine Polyolkomponente, enthaltend Verbindungen mit gegenüber Isocyanaten reaktiven Gruppen in solchen Mengenverhältnissen vermischt, dass der Isocyanatindex im Bereich von 40 bis 300, vorzugsweise 60 bis 200 und besonders bevorzugt 80 bis 150 ist.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Die Polyurethanreaktionsmischung wird vorzugsweise erhalten durch Vermischen von a) Isocyanaten mit b) höhermolekularen Verbindungen mit mindestens zwei gegenüber Isocyanat reaktiven Wasserstoffatomen sowie gegebenenfalls c) Kettenverlängerungsmitteln und/oder Vernetzungsmitteln, d) Katalysatoren und e) sonstigen Zusatzstoffen. Besonders bevorzugt werden als Komponenten a) und b) sowie gegebenenfalls c) bis e) solche Verbindungen eingesetzt, die zu einer hydrophoben Polyurethanreaktionsmischung und zu einem hydrophoben Polyurethan führen.

Als Isocyanate a) können prinzipiell alle bei Raumtemperatur flüssigen Isocyanate, Mischungen und Prepolymere mit mindestens zwei Isocyanatgruppen eingesetzt werden. Vorzugsweise kommen aromatische Isocyanate zum Einsatz, besonders bevorzugt Isomere des Toluylendiisocyanats (TDI) und des Diphenylmethandiisocyanats (MDI), insbesondere Mischungen aus MDI und Polyphenylenpolymethylenpolyisocyanaten (Roh-MDI). Die Isocyanate können auch modifiziert sein, beispielsweise durch den Einbau von Isocyanuratgruppen und Carbodiimidgruppen und insbesondere durch den Einbau von Urethangruppen. Die letztgenannten Verbindungen werden durch Umsetzung von Isocyanaten mit einem Unterschuss an Verbindungen mit mindestens zwei aktiven Wasserstoffatomen hergestellt und üblicherweise als NCO-Prepolymere bezeichnet. Ihr NCO-Gehalt liegt zumeist im Bereich zwischen 2 und 32 Gew.-%. Vorzugsweise enthalten die Isocyanate a) Roh-MDI, wodurch die Stabilität des erhaltenen Polyurethans erhöht wird.

Nachteilig bei der Verwendung von aromatischen Isocyanaten ist die unzureichende Farbstabilität der daraus hergestellten Polyurethane. Zumeist kommt es mit der Zeit zu einer deutlichen Vergilbung der Polyurethane. Bei Anwendungen des erfindungsgemäßen Verfahrens, bei denen es auf eine hohe Farbstabilität ankommt, ist daher die Verwendung von Mischungen, enthaltend aliphatische Isocyanate und aromatische Isocyanate, bevorzugt. Besonders bevorzugt werden ausschließlich aliphatische Isocyanate eingesetzt. In einer besonderen Ausführungsform kann eine Oberschicht aus Polyurethan auf Basis eines aliphatischen Isocyanates eingesetzt werden, um die Deckschicht auf Basis von aromatischem Isocyanat vor dem Vergilben zu schützen. Dabei kann die Oberschicht auch mineralischen Zuschlagstoff enthalten. Bevorzugte Vertreter sind Hexamethylendiisocyanat (HDI) und Isophorondiisocyanat (IPDI). Auf Grund der hohen Flüchtigkeit der aliphatischen Isocyanate werden diese zumeist in Form ihrer Umsetzungsprodukte, insbesondere als Biurete, Allophanate oder Isocyanurate eingesetzt. Ebenso können die aliphatischen mit allen denkbaren und insbesondere unter b) aufgeführten Polyolen zu Prepolymeren umgesetzt und eingesetzt werden.

Als höhermolekulare Verbindungen mit mindestens zwei gegenüber Isocyanat reaktiven Wasserstoffatomen b) werden vorzugsweise Verbindungen eingesetzt, die als gegenüber Isocyanat reaktive Gruppe Hydroxylgruppen oder Aminogruppen aufweisen. Vorzugsweise werden mehrfunktionelle Alkohole eingesetzt, da die Aminogruppen sehr reaktiv sind und das Reaktionsgemisch daher rasch verarbeitet werden muss. Darüber hinaus führten Aminogruppen zur Bildung von Harnstoffgruppen, die wiederum zu einem überwiegend spröden Polyurethan aushärten.

Als höhermolekulare, mehrfunktionelle Alkohole können beispielsweise Polyether oder Polyester eingesetzt werden. Gemeinsam mit den genannten Verbindungen können weitere Verbindungen mit mindestens zwei gegenüber Isocyanatgruppen reaktiven Wasserstoffatomen eingesetzt werden. Auf Grund ihrer hohen Hydrolysebeständigkeit sind Polyetheralkohole bevorzugt. Diese werden nach üblichen und bekannten Verfahren, zumeist durch Anlagerung von Alkylenoxiden an H-funktionelle Startsubstanzen, hergestellt. Die mitverwendeten Polyetheralkohole haben vorzugsweise eine Funktionalität von mindestens 3 und eine Hydroxylzahl von mindestens 400 mg KOH/g, vorzugsweise mindestens 600 mg KOH/g, insbesondere im Bereich von 600 bis 1000 mg KOH/g. Ihre Herstellung erfolgt auf üblichem Wege durch Umsetzung von mindestens dreifunktionellen Startsubstanzen mit Alkylenoxiden. Als Startsubstanzen können vorzugsweise Alkohole mit mindestens drei Hydroxylgruppen im Molekül eingesetzt werden, beispielsweise Glyzerin, Trimethylolpropan, Pentaerythrit, Sorbit, Saccharose. Als Alkylenoxid wird vorzugsweise Propylenoxid eingesetzt.

Vorzugsweise enthalten erfindungsgemäße Reaktionsmischungen Verbindungen mit hydrophoben Gruppen. Besonders bevorzugt handelt es sich dabei um hydroxylfunktionalisierte Verbindungen mit hydrophoben Gruppen. Solche hydrophoben Gruppen haben Kohlenwasserstoffgruppen mit vorzugsweise mehr als 6, besonders bevorzugt mehr als 8 und weniger als 100 und insbesondere mehr als 10 und weniger als 50 Kohlenstoffatomen. Die Verbindungen mit hydrophoben Gruppen können als separate Komponente oder als Bestandteil einer der Komponenten a) bis e) zur Herstellung der Reaktionsmischung eingesetzt werden. Vorzugsweise handelt es sich bei den hydroxylfunktionalisierten hydrophoben Verbindungen um Verbindungen, die der Definition der höhermolekularen Verbindungen mit mindestens zwei gegenüber Isocyanaten reaktiven Wasserstoffatomen b) entspricht. Dabei kann die Komponente b) hydroxylfunktionalisierte hydrophobe Verbindungen enthalten oder vorzugsweise daraus bestehen.

Als hydroxylfunktionalisierte hydrophobe Verbindung wird vorzugsweise eine hydroxyfunktionalisierte fettchemische Verbindung, ein fettchemisches Polyol, eingesetzt.

Es sind eine Reihe von hydroxylfunktionellen fettchemischen Verbindungen bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen^{®} 1150 vertrieben.

Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxydierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma Cognis und Altropol angeboten.

In einer besonders bevorzugten Ausführungsform des erfindungsgemäßen Verfahrens enthalten die höhermolekularen Verbindungen mit mindestens zwei gegenüber Isocyanat reaktiven Wasserstoffatomen b) mindestens ein fettchemisches Polyol und mindestens ein mit Phenol modifiziertes aromatisches Kohlenwasserstoffharz, insbesondere ein Inden-Cumaron-Harz. Polyurethanreaktionsmischungen auf Basis dieser Komponente b) weisen eine derart hohe Hydrophobie auf, dass sie prinzipiell sogar unter Wasser aushärten können, bzw. der Einbau bei Regen möglich ist.

Als mit Phenol modifizierte aromatisches Kohlenwasserstoffharze mit einer endständigen Phenolgruppe, werden vorzugsweise mit Phenol modifizierte Inden-Cumaron-Harze, besonders bevorzugt technische Gemische von aromatischen Kohlenwasserstoffharzen verwendet. Derartige Produkte sind handelsüblich und werden beispielsweise von der Firma Rütgers VFT AG unter dem Handelsnamen NOVARES^{®} angeboten.

Die mit Phenol modifizierten aromatischen Kohlenwasserstoffharze, insbesondere die mit Phenol modifizierten Inden-Cumaron-Harze, weisen zumeist einen OH-Gehalt zwischen 0,5 und 5,0 Gew.-% auf.

Vorzugsweise werden das fettchemische Polyol und das mit Phenol modifizierte aromatische Kohlenwasserstoffharz, insbesondere das Inden-Cumaron-Harz in einem Gewichtsverhältnis von 100 : 1 bis 100 : 50 eingesetzt.

Bei der Herstellung einer erfindungsgemäßen Polyurethanreaktionsmischung kann ein Kettenverlängerungsmittel c) eingesetzt werden. Dabei kann jedoch auf das Kettenverlängerungsmittel c) verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Werden niedermolekulare Kettenverlängerungsmittel und/oder Vernetzungsmittel c) eingesetzt, können bei der Herstellung von Polyurethanen bekannten Kettenverlängerer eingesetzt werden. Dies sind vorzugsweise niedermolekulare Verbindungen mit gegenüber Isocyanaten reaktiven Gruppen mit einem Molekulargewicht von 62 bis 400 g/mol, beispielsweise Glycerin, Trimethylolpropan, bekannte Glycolderivate, Butandiol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Die eingesetzten Polyurethane können prinzipiell ohne die Anwesenheit von Katalysatoren d) hergestellt werden. Zur Verbesserung der Aushärtung können Katalysatoren d) mit verwendet werden. Als Katalysatoren d) sollten vorzugsweise solche ausgewählt werden, die eine möglichst lange Reaktionszeit bewirken. Dadurch ist es möglich, dass die Polyurethanreaktionsmischung lange flüssig bleibt. Solche Katalysatoren sind dem Fachmann bekannt. Prinzipiell ist es, wie beschrieben, möglich, auch ganz ohne Katalysator zu arbeiten.

Der Polyurethanreaktionsmischung können weitere übliche Bestandteile zugesetzt werden, beispielsweise übliche Zusatzstoffe e). Diese umfassen beispielsweise übliche Füllstoffe. Vorzugsweise werden als Füllstoffe die an sich bekannten, üblichen organischen und anorganischen Füllstoffe, Verstärkungsmittel und Beschwerungsmittel verwendet. Im einzelnen seien beispielhaft genannt: anorganische Füllstoffe, wie silikatische Mineralien, beispielsweise Schichtsilikate, wie Antigorit, Serpentin, Hornblenden, Amphibole, Chrisotil, Metalloxide, wie Kaolin, Aluminiumoxide, Titanoxide und Eisenoxide, Metallsalze, wie Kreide, Schwerspat und anorganische Pigmente, wie Cadmiumsulfid, Zinksulfid sowie Glas. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.

Werden oben genannte anorganische Füllstoffe als Zusatzstoffe e) eingesetzt, weisen diese vorzugsweise eine andere Mineralstoffzusammensetzung als die mineralischen Zuschlagstoffe auf und werden nicht bei der Bestimmung der Korngrößenverteilung des mineralischen Zuschlagstoffes berücksichtigt.

Die anorganischen und organischen Füllstoffe können einzeln oder als Gemische verwendet werden und sind in der Reaktionsmischung vorzugsweise in Mengen von 0,5 bis 50 Gew.-%, besonders bevorzugt 1 bis 40 Gew.-%, bezogen auf das Gewicht der Komponenten a) bis e) enthalten.

Weiter sollte die Polyurethanreaktionsmischung Trockenmittel, beispielsweise Zeolithe, enthalten. Diese werden vorzugsweise vor der Herstellung der erfindungsgemäßen Reaktionsmischung den Verbindungen mit mindestens zwei gegenüber Isocyanat reaktiven Wasserstoffatomen b) beziehungsweise der Komponente, welche die Verbindungen mit mindestens zwei gegenüber Isocyanat reaktiven Wasserstoffatomen b) enthält, zugegeben. Durch die Zugabe der Trockenmittel wird die Anreicherung von Wasser in den Komponenten bzw. der Reaktionsmischung vermieden bzw. in den Rohstoffen der Formulierung vorhandenes Wasser absorbiert, wodurch die Bildung von geschäumtem Polyurethan vermieden wird. Als Additive zur Wasseradsorption werden vorzugsweise Aluminosilikate, ausgewählt aus der Gruppe der Natriumaluminasilikate, Kaliumaluminasilikate, Calciumaluminasilikate, Cäsiumaluminasilikate, Bariumaluminasilikate, Magnesiumaluminasilikate, Strontiumaluminasilikate, Natriumaluminophosphate, Kaliumaluminophosphate, Calciumaluminophosphate und Mischungen davon, verwendet. Besonders bevorzugt werden Mischungen von Natrium-, Kalium- und Calciumaluminasilikaten in Ricinusöl als Trägersubstanz verwendet. Diese Trockenmittel werden nicht dem "mineralischen Zuschlagstoff" zugerechnet.

Zur Verbesserung der Langzeitstabilität der erfindungsgemäßen Deckschichten ist es weiterhin vorteilhaft, Mittel gegen den Angriff von Kleinlebewesen zuzusetzen. Außerdem ist der Zusatz von UV-Stabilisatoren vorteilhaft, um eine Versprödung der Formkörper zu vermeiden. Solche Zusatzstoffe sind bekannt und beispielsweise im "Kunststoffhandbuch, Band 7, Polyurethane", Carl Hanser Verlag, 3. Auflage 1993, Kapitel 3.4 angegeben.

Weiter können die Zusatzstoffe e) übliche Haftvermittler, vorzugsweise auf Basis von Silanen enthalten. Besonders bevorzugt werden als Haftvermittler eine oder mehrere Hydroxy- oder Alkoxyaminosilanverbindungen der allgemeinen Formel (I) 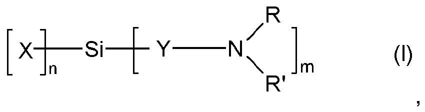 worin bedeuten X unabhängig voneinander für OH, CH₃ oder O[CH₂]ₚCH₃; Y für [CH₂]ₜ oder [CH_{2]r}NH[CH2]_{s;} R und R' für Wasserstoff oder [CH₂]ₜCH₃; t für 0 bis 10; n für1 bis 3; p für 0 bis 5; m für 4 minus n und r und s unabhängig voneinander für 1 bis10 stehen. Solche bevorzugten Haftvermittler sind beispielsweise in WO 2010/043644 beschrieben.

Der Zusatz der Komponenten c), d) und e) erfolgt vorzugsweise zu den Verbindungen mit mindestens zwei mit Isocyanatgruppen reaktiven Wasserstoffatomen. Diese Abmischung wird in der Technik häufig als Polyolkomponente bezeichnet.

Die Kombination der Isocyanate mit den Verbindungen mit mindestens zwei mit Isocyanatgruppen reaktiven Wasserstoffatomen sollte in einem solchen Verhältnis erfolgen, dass vorzugsweise ein stöchiometrischer Überschuss an Isocyanatgruppen vorliegt.

In einer bevorzugten Ausführungsform der Erfindung werden Polyurethanreaktionsmischungen eingesetzt, die zu hydrophoben, im Wesentlichen kompakten Polyurethanen führen. Als kompaktes Polyurethan wird ein Polyurethan bezeichnet, das im Wesentlichen frei von Gaseinschlüssen ist. Vorzugsweise ist die Dichte eines kompakten Polyurethans größer 0,8 g/cm³, besonders bevorzugt größer 0,9 g/cm³ und insbesondere größer 1,0 g/cm³.

Dabei beträgt das Gewichtsverhältnis von Polyurethanreaktionsmischung und mineralischem Zuschlagstoff vorzugsweise 2 : 98 bis 15 : 85, besonders bevorzugt 3 : 97 bis 10 : 90 und insbesondere 4 : 96 bis 8 : 92.

Neben Polyurethanreaktionsmischung und mineralischem Zuschlagstoff kann eine erfindungsgemäße Mischung, enthaltend mineralischem Zuschlagstoff und eine zweite Polyurethanreaktionsmischung, auch weitere Additive enthalten. Vorzugsweise enthalten die Additive Materialien, die das Ablaufen des Bindemittels von dem mineralischen Zuschlagstoff verhindert. Als solche Additive können beispielsweise organische Fasern, wie Cellulosefasern oder anorganische Thixotropierhilfen, wie pyrogene Kieselsäure, zum Beispiel Aerosil® der Firma Evonik, zugegeben werden. Diese Thixothropiehilfen werden nicht dem Mineralischen Material zugerechnet. Des Weiteren können Polymere zugesetzt werden, die auch heute schon in den verwendeten bitumenbasierten Systemen eingesetzt werden. Vor allem sind dies Neoprene, Styrol-Butadien-Styrol Blockcopolymere oder deren Mischungen sowie auch alle weiteren bekannten Gummis und deren Mischungen. Die Additive können sowohl direkt dem Mineralgemisch als Pulver oder Granulat zugesetzt als auch in eine der Polyurethankomponenten dispergiert werden. Des Weiteren können reaktive Additive zur insitu Thixotropierung der Polyurethanmischung verwendet werden. Beispielsweise können mono- oder höherfunktionelle Amine mit wenigen Prozentanteilen in der Polyolmischung zur Thixotropierung verwendet werden, wie Polyetherolamine, zum Beispiel Jeffamine Huntsman oder Polyetheramine der BASF" Diethyltoluoldiamin, beispielsweise DETDA 80, alkylierte Methylendiphenylendiamine beispielsweise Lonzacure® M-CDA, Lonzacure® M-DEA oder Lonzacure® M-DIPA sowie Mischungen dieser Thixotropiermittel.

Die Herstellung der erfindungsgemäßen Mischung, enthaltend mineralischen Zuschlagstoff und eine zweite Polyurethanreaktionsmischung, ist nicht beschränkt. So kann die Herstellung beispielsweise in Mischern erfolgen, in welche der mineralische Zuschlagstoff eingebracht wird und die Ausgangskomponenten zur Herstellung der Polyurethanreaktionsmischung beispielsweise durch sprühen eingebracht werden. Gegebenenfalls zuzugebende Additive werden dabei vorzugsweise zum jeweils vorteilhaften Zeitpunkt zu der Mischung zugegeben. So können diese beispielsweise in einer der Komponenten der Reaktionsmischung, beispielsweise einer der Komponenten a) bis e), gelöst oder dispensiert vorliegen und zusammen mit diesen der Mischung zugegeben werden. Ebenso können die Additive auch gesondert der Mischung zugegeben werden. Beispielsweise können Cellulosefasern zu einem solchen Zeitpunkt zugegeben werden, dass diese in der Mischung zur Herstellung von Deckschichten homogen verteilt vorliegen, aber nicht durch den Mischvorgang zerstört werden. Dabei kann die erfindungsgemäße Mischung zur Herstellung von Deckschichten beispielsweise gemäß dem in DE 19632638 beschriebenen Verfahren hergestellt werden. Weiter ist es beispielsweise ebenfalls möglich, zuerst die Polyurethanreaktionsmischung herzustellen und diese anschließend mit dem mineralischen Zuschlagstoff und den gegebenenfalls weiteren Additiven zu vermischen. Gegebenenfalls kann in einer weiteren Ausführungsform der mineralische Zuschlagstoff zuerst mit einigen Komponenten der Reaktionsmischung vermischt werden, beispielsweise mit den Komponenten b) und, falls vorhanden c) bis e), und anschließend die noch fehlenden Komponenten, beispielsweise die Komponente a) in einem Mischer zugegeben werden. Der Anteil der zweiten Polyurethanreaktionsmischung beträgt vorzugsweise 1 bis 10, besonders bevorzugt 2 bis 8 und insbesondere 3 bis 6 M.-%, bezogen auf das Gesamtgewicht an mineralischem Zuschlagstoff und zweiter Polyurethanreaktionsmischung.

Vorzugsweise wird die zu reparierende Stelle der Deckschicht vor dem Aufbringen des polymeren Materials gesäubert. Dies kann beispielsweise durch Auskehren oder Ausblasen erfolgen. Ebenso kann die zu reparierende Stelle durch Niederdruck- oder Hochdruckwäsche gereinigt werden, sollte dann jedoch vor Applikation des polymeren Materials optisch trocken erscheinen. Restfeuchtigkeit durch Feuchtigkeit in den tieferen Lagen des offenporigen Materials stört nicht. Nach dem Aufbringen des polymeren Materials lässt man vorzugsweise eventuell vorhandenes Lösemittel beispielweise durch Abdampfen entweichen. Sollte das polymere Material in Form einer Reaktionsmischung aufgebracht worden sein, kann man das erste polymere Material direkt aufbringen oder man lässt vorzugsweise die Reaktion zur Bildung des polymeren Materials so weit ablaufen, dass das polymere Material vorzugsweise ein mittleres Molekulargewicht von mindestens 500 g/mol aufweist.

Anschließend wird die erste Polyurethanreaktionsmischung in einer Menge von mindestens 80 g/m², vorzugsweise 100 g/m² bis 1000 g/m² und besonders bevorzugt 120 bis 500 g/m² auf das polymere Material aufgebracht.

Auf die erste Polyurethanreaktionsmischung bzw. das durch Ausreagieren der ersten Polyurethanreaktionsmischung erhaltene Polyurethan wird die Mischung, enthaltend mineralischen Zuschlagstoff und eine zweite Polyurethanreaktionsmischung, aufgebracht. Vorzugsweise wird die Mischung, enthaltend mineralischen Zuschlagstoff und ein zweite Polyurethanreaktionsmischung, aufgebracht, solange die erste Polyurethanreaktionsmischung den Gelzeitpunkt bzw. die Fadenziehzeit noch nicht erreicht hat. Dabei ist der Gelzeitpunkt der Zeitpunkt, bei dem in der rheologischen Messung bei Raumtemperatur der Speichermodul größer als der Verlustmodul ist. Im Rahmen dieser Erfindung wird der Gelzeitpunkt näherungsweise über die Fadenziehzeit bestimmt. Dazu wird ein Holzstab mehrfach auf die Oberfläche der Polyurethanreaktionsmischung gegeben. Sobald sich beim Entfernen des Holzstabs von der Oberfläche ein Faden bildet, ist die die Fadenziehzeit erreicht.

Nach dem Auftragen der erfindungsgemäßen Mischung zur Herstellung von Deckschichten wird diese auf die Höhe des umliegenden Straßenbelags abgezogen. Anschließend kann dieses noch mit Sand abgestreut werden, vorzugsweise wenn es sich nicht um einen offenporigen Asphalt mit lärmtechnischen Anforderungen handelt. Gegebenenfalls kann die Mischung vor dem Abstreuen vorsichtig verdichtet werden, um eine Verzahnung der Mineralstoffe zu erreichen, beispielsweise durch leichtes Stampfen oder den Einsatz einer im Straßenbau üblichen leichten Straßenwalze. Eine Absenkung im Vergleich zum umliegenden Straßenbelag soll vermieden werden.

Das so erhaltene Reparaturmaterial lässt man dann aushärten, gegebenenfalls unter Einsatz von Wärme. Wird als Polyurethanmaterial ein feuchtgkeitshärtendes Material eingesetzt, kann zu Härten auch Wasserdampf eingesetzt werden.

Weiter ist Gegenstand der Erfindung ein Reparaturkit zur Reparatur von Deckschichten für Straßen, Wege und andere Verkehrsflächen, enthaltend ein polymeres Material, gegebenenfalls eine erste Polyurethanreaktionsmischung und eine zweite Polyurethanreaktionsmischung sowie gegebenenfalls weitere Additive und mineralischen Zuschlagstoff.

Die Aufbringung der unterschiedlichen Lagen kann durch Arbeitstrupps manuell durch Sprühen, Rollen oder Verstreichen erfolgen. Eine maschinelle Applikation durch Adaption von Straßenfertigern, automatisiertem Sprühequipment und anderem nötigen Equipment ist ebenfalls möglich.

Das erfindungsgemäße Verfahren zur Reparatur von Deckschichten für Straßen, Wege und andere Verkehrsflächen führt zu einer dauerhaften Erneuerung der Deckschicht, da sich eine sehr starke Haftung zwischen dem Asphalt und dem eingesetzten Reparaturmaterial ausbildet. Dabei umfassen andere Verkehrsflächen alle Verkehrsflächen, die gebundene Deckschichten aufweisen, wie Rollbahnen und Start- und Landebahnen auf Flughäfen sowie Gehwege oder Radwege. Dies ermöglicht sogar den Einsatz zur Reparatur von offenporigem Asphalt, wobei bei der Reparatur wiederum ein offenporiges Element gebildet wird, das weder bei der Geräuschdämmung noch der Drainagefähigkeit der alten Deckschicht, insbesondere der alten, offenporigen Asphaltdeckschicht nachsteht. Auch zeigt die reparierte Stelle im Vergleich zu konventionellen Reparaturmischungen eine hohe Frostsicherheit und eine geringe Neigung zur Bildung von Spurrillen und ist schneller mir üblichen Geschwindigkeiten befahrbar, da die gewünschte Rutschfestigkeit direkt nach Aushärten gegeben ist. Darüber hinaus lässt sich bei der erfindungsgemäßen Reparaturmischung die Rutschfestigkeit, beispielsweise durch Abstreuen der Oberfläche mit Sand oder Gesteinsmaterial vor dem endgültigen Aushärten der Reparaturmischung einstellen. Schließlich kann durch färbende Zusätze oder durch Auswahl der Färbung des eingesetzten mineralischen Materials die Farbe und Helligkeit der reparierten Stelle genau an das umgebende Material angepasst werden.

Im Folgenden soll die Erfindung anhand von Beispielen erläutert werden.

### Beispiele

| | |
|---|---|
| Polyolkomponente: | Elastopave 6551/102, enthaltend eine Hydroxylfunktionelle fettchemische Komponente auf Basis von Rizinusöl, trifunktionellen Kettenverlängerer, reaktives Amin zur Thixothropierung und Entschäumer |
| Isocyanat: | Polymeres Diisocyanatodiphenylmethan (PMDI) |
| Primer 1: | Mastertop P 691 der BASF; einkomponentiger Polyurethanhaftvermittler in Lösemittel |
| Primer 2: | Mastertop P 690 der BASF; Einkomponentenhaftprimer auf Polyacrylatbitumenbasis |

### Herstellung der Polyurethanreaktionsmischung und der Reparaturmischung

100 Gew.-Teile der Polyolkomponente des Systems Elastopave 6551/102 wurden mit 83,7 Gew.-Teile Isocyanat intensiv zu einer Polyurethanreaktionsmischung vermischt. 5 Gew.-% dieser Polyurethanreaktionsmischung werden mit 95 Gew.-% 2/4 Diabas zu einer Reparaturmischung vermischt. Die Reparaturmischung aus Vergleichsbeispiel 5 enthielt 8 Gew.-% Polyurethanreaktionsmischung und 92 Gew.-% 2/4 Dibas.

Für die Haftungsversuche wurden Probeplatten aus Asphaltbindermaterial AC 16 BS mit den Abmessungen 320 x 260 x 50 mm eingesetzt. Im ersten Schritt wurden die Asphaltplatten gemäß Tabelle gegebenenfalls mit Primer beschichtet. Nach dem Ablüften wird gegebenenfalls eine zweite Lage Binder aufgebracht und anschließend sofort mit der Reparaturmischung in einer Höhe von 1 cm beschichtet und mechanisch leicht komprimiert. Nach dem Aushärten wurden mit einem 5 cm Hohlbohrer Probekörper hergestellt, an denen die Haftung der Reparaturmischung an dem Asphaltbindermaterial in Anlehnung an die TP Asphalt StB T81 bestimmt wurde, wobei abweichend von der genannten Prüfvorschrift der Stempeldurchmesser 47,5 mm betrug. Die eingesetzten Mengen an Primer sowie die Messergebnisse der Haftungsmessung sind in der Tabelle zusammengefasst. Dabei wurde zur Bestimmung der Haftung angegebene Wert aus dem Mittelwert von 4 Probekörpern bestimmt.

**Tabelle**

| Versuch | 1. Primer | 2. Primer | Reparaturmischung, Anteil Polyurethanreaktionsmischung | Flächengewicht Primer 1 [g/m²] | Flächengewicht Primer 2 [g/m²] | Haftung [MPa] |
|---|---|---|---|---|---|---|
| Vergleich1 | - | - | 5% | | | Keine Haftung; |
| Vergleich2 | Polyurethanreaktionsmischung | - | 5% | 168 | - | 0,5 |
| Vergleich3 | Primer 1 | - | | 144 | | 0,3 |
| Vergleich4 | Primer 2 | - | 5% | 180 | - | 0,6 |
| Vergleich5 | Primer 2 | - | 8% | 144 | - | 0,7 |
| Beispiel 1 | Primer 2 | Polyurethanreaktionsmischung | 5% | 144 | 144 | 0,7 |
| Beispiel 2 | Primer 2 und Polyurethanreaktionsmischung jeweils 50 Gew.-%) | - | 5% | 144 | 0 | 0,8 |
| Beispiel 3 | Primer 2 | Polyurethanreaktionsmischung | 5% | 156 | 276 | 0,9 |
| Beispiel 4 | Primer 1 | Polyurethanreaktionsmischung | 5% | 132 | 144 | 1.0 |

Die Beispiele zeigen, dass durch Primern mit einem polymeren Material und einer Polyurethanreaktionsmischung eine besonders hohe Haftung der Reparaturmischung auf dem Asphaltbindermaterial erhalten wird.

## Patentansprüche

1. Verfahren zur Reparatur von Deckschichten für Straßen, Wege und andere Verkehrsflächen, bei dem man ein polymeres Material in einer Menge von mindestens 20 g/m² auf die beschädigte Stelle aufbringt, eine erste Polyurethanreaktionsmischung in einer Menge von mindestens 80 g/m² auf das polymere Material aufbringt und eine Mischung, enthaltend mineralischen Zuschlagstoff und eine zweite Polyurethanreaktionsmischung, auf die erste Polyurethanreaktionsmischung aufbringt und aushärten lässt.

2. Verfahren nach Anspruch 1, **dadurch gekennzeichnet, dass** die Deckschichten offenporige Asphaltdeckschichten sind und die Mischung, enthaltend mineralischen Zuschlagstoff und eine zweite Polyurethanreaktionsmischung zu einem offenporigen Material aushärtet.

3. Verfahren nach Anspruch 1 oder 2, **dadurch gekennzeichnet, dass** die erste Polyurethanreaktionsmischung beim Aufbringen der Mischung, enthaltend mineralischen Zuschlagstoffmineralisches Material und eine zweite Polyurethanreaktionsmischung, die Fadenziehzeit noch nicht erreicht hat.

4. Verfahren nach einem der Ansprüche 1 bis 3, **dadurch gekennzeichnet, dass** das polymere Material auf Gestein und/oder Bitumen haftende Gruppen aufweist.

5. Verfahren nach Anspruch 4, **dadurch gekennzeichnet, dass** das polymere Material Polyharnstoffbindungen und/oder Polyurethanbindungen aufweist.

6. Verfahren nach einem der Ansprüche 1 bis 5, **dadurch gekennzeichnet, dass** die erste Polyurethanreaktionsmischung und die zweite Polyurethanreaktionsmischung erhältlich ist durch Vermischen von
a) Isocyanaten mit
b) Verbindungen mit mindestens zwei gegenüber Isocyanat reaktiven Wasserstoffatomen sowie gegebenenfalls
c) Kettenverlängerungsmitteln und/oder Vernetzungsmitteln,
d) Katalysatoren und
e) sonstiger Zusatzstoffe,
wobei die Einsatzstoffe zur Herstellung der ersten Polyurethanreaktionsmischung und der zweiten Polyurethanreaktionsmischung identisch oder unterschiedlich sein können.

7. Verfahren nach Anspruch 6, **dadurch gekennzeichnet, dass** die Verbindung mit mindestens zwei gegenüber Isocyanat reaktiven Wasserstoffatomen b) eine hydroxyfunktionelle Verbindung mit hydrophoben Gruppen enthält.

8. Verfahren nach Anspruch 7, **dadurch gekennzeichnet, dass** die hydroxyfunktionelle Verbindung mit hydrophoben Gruppen eine hydroxyfunktionelle fettchemische Verbindung enthält.

9. Verfahren nach Anspruch 7 oder 8, **dadurch gekennzeichnet, dass** die Verbindung mit mindestens zwei gegenüber Isocyanat reaktiven Wasserstoffatomen b) eine hydroxyfunktionelle fettchemische Verbindung und ein mit Phenol modifiziertes aromatisches Kohlenwasserstoffharz enthält.

10. Verfahren nach einem der Ansprüche 1 bis 9, **dadurch gekennzeichnet, dass** der Anteil der Polyurethanreaktionsmischung 2 bis 10 Gew.-%, bezogen auf das Gesamtgewicht der Mischung, beträgt.

11. Reparaturkit zur Reparatur von Deckschichten für Straßen, Wege und andere Verkehrsflächen, enthaltend ein polymeres Material, gegebenenfalls eine erste Polyurethanreaktionsmischung und eine zweite Polyurethanreaktionsmischung sowie gegebenenfalls weitere Additive und mineralischen Zuschlagstoff.
